(19) Europäisches Patentamt
European Patent Office
Office européen des brevets

(11) EP 1 920 872 A1

(12) EUROPEAN PATENT APPLICATION
published in accordance with Art. 153(4) EPC

(43) Date of publication:
14.05.2008 Bulletin 2008/20

(51) Int Cl.:
B23K 26/20 (2006.01)        B23K 9/16 (2006.01)
B23K 26/14 (2006.01)

(21) Application number: 06781973.0

(22) Date of filing: 28.07.2006

(86) International application number:
PCT/JP2006/315063

(87) International publication number:
WO 2007/026493 (08.03.2007 Gazette 2007/10)

(84) Designated Contracting States:
DE FR GB SE

(30) Priority: 31.08.2005 JP 2005250889

(71) Applicant: Taiyo Nippon Sanso Corporation
Shinagawa-ku,
Tokyo 1428558 (JP)

(72) Inventor: KAMEI, Toshikazu
Tokyo 142-8558 (JP)

(74) Representative: Lamb, Martin John Carstairs
Marks & Clerk
90 Long Acre
London WC2E 9RA (GB)

(54) **SHIELDING GAS FOR HYBRID WELDING AND WELDING METHOD USING SUCH GAS**

(57) The present invention relates to a shielding gas for hybrid welding of a steel plate by combining laser welding and arc welding, **characterized by** containing: carbon dioxide; and oxygen, in which the mixing ratio of carbon dioxide and oxygen satisfies the following conditions:

$$15 \leq A \leq 35, \ 1.0 \leq B < 9.0, \ \text{and} \ B \geq 16 - 0.6A,$$

in which A is the volume percentage of carbon dioxide and B is the volume percentage of oxygen.

## FIG. 2

**Description**

TECHNICAL FIELD

The present invention relates to hybrid welding jointly performing laser welding using a laser beam and arc welding using an arc.

Priority is claimed on Japanese Patent Application No. 2005-250889, filed on August 31, 2005, the content of which is incorporated herein by reference.

BACKGROUND ART

Hybrid welding is a welding method performed by combining laser welding and arc welding. Hybrid welding is a welding method which enables minimization of both the defects of laser welding and the defects of arc welding by combining the characteristics of laser welding which realizes high-sped welding and deep-penetration but has a very expensive thermal source, and the characteristics of arc welding which has only moderately expensive thermal source and let down groove precision standard due to its supplying wire.

As a result, the welding of joints with gaps, which is difficult to perform by laser welding, can be performed, and deep penetration and high-speed welding, which are difficult to perform by arc welding, can be achieved. Thereby, heat-input into the material to be welded can be reduced and deformation caused by welding can be decreased.

However, since a laser beam is used as the thermal source in hybrid welding, the defects of laser welding, such as, for example, the occurrence of blowholes, tend to also occur in hybrid welding.

In hybrid welding, a shielding gas used for arc welding is conventionally used as a shielding gas for masking a molten pool during welding, and a mixed gas prepared by adding carbon dioxide gas or oxygen gas to an inert gas, such as, for example, argon gas or helium gas, is generally used.

As a method for preventing the occurrence of internal defects, such as, for example, blowholes formed by hybrid welding, a welding method in which a mixed gas consisting of helium gas and 10 to 80% argon gas is used as shielding gas is proposed in Patent Document 1.

However, it is difficult to utilize the method except when high added value is created, since helium is an expensive gas. In addition, since no elements that stabilize arc, such as, for example, carbon dioxide gas or oxygen gas, are contained, the droplet transfer process in hybrid welding of steel plate is unstable, and as a result welding defects may occur when hybrid welding a steel plate.

As a method for preventing occurrence of defects in laser welding, such as, for example, blowholes, a method using a mixed gas prepared by adding 2 to 5% by volume of oxygen gas to argon gas is disclosed in Patent Document 2.

The results of experimentation performed by using the mixed gas as a shielding gas in hybrid welding revealed that an addition of only 2 to 5% by volume of oxygen gas does not stabilize the arc and significantly causes both bead shape and internal defects.

As a method for preventing the occurrence of defects in laser welding, such as, for example, blowholes, a method using a mixed gas prepared by adding 80 to 95% by volume of carbon dioxide gas to an inert gas such as argon or the like is disclosed in Patent Document 3.

With respect to the mixed gas, experimentation results revealed that, when the content of the carbon dioxide gas is 50% by volume or more, the total number of internal defects decreases, but blowholes with a diameter of 1.0 mm or more are formed inside welded portions, and the ratio of the cross-sectional area of blowholes with respect to the cross-sectional area of welded portions thereby increases, which is not favorable.

Moreover, even if a mixed gas of argon and carbon dioxide or a mixed gas of argon and oxygen was used in the experiments performed by the present inventors, the mixed gases being generally used as shielding gases in arc welding, the occurrence of internal defects could not be satisfactorily decreased.

Patent Document 1 Japanese Laid-Open Patent Application, No. 2003-164983
Patent Document 2 Japanese Patent Application, First Publication No. H9-103892
Patent Document 3 Japanese Laid-Open Patent Application, No. 2001-138085

DISCLOSURE OF THE INVENTION

[Problems to be Solved by the Invention]

An object of the present invention is to provide a shielding gas for hybrid welding which is when a steel plate is welded by a combination of laser welding and arc welding, in which the shielding gas does not cause any internal defects, such as blowholes or the like, in welded portions, the shielding gas stabilizes the arc to realize a favorable bead shape, and the shielding gas can be provided at a low cost.

[Means for Solving the Problems]

In order to solve the above-mentioned problems, the present inventors focused on the components of the shielding gas used so as to reduce welding defects, such as blowholes, occurring in hybrid welding. It was found that the use of a mixture composed of three kinds of gas (argon gas, oxygen gas, and carbon dioxide gas) in particular ratios reduces welding defects.

A first aspect of the present invention is a shielding gas for hybrid welding of a steel plate by a combination of laser welding and arc welding, characterized by containing carbon dioxide and oxygen, in which the mixing ratio of carbon dioxide and oxygen satisfies the following conditions:

$$15 \leq A \leq 35, \text{ and, } 1.0 \leq B < 9.0, \text{ and, } B \geq 16 - 0.6A,$$

in which A is the volume percentage of carbon dioxide and B is the volume percentage of oxygen.

In the shielding gas for hybrid welding of the first aspect, it is more preferable that the mixing ratio of the carbon dioxide and the oxygen satisfy the following conditions:

$$25 \leq A \leq 35, \text{ and, } B \geq 8 - 0.2A, \text{ and, } B \leq 13 - 0.2A.$$

A second aspect of the present invention is a hybrid welding method for welding a steel plate by combining laser welding and arc welding, characterized in that a laser beam, an arc, and the above-mentioned shielding gas are applied to the steel plate.

In the hybrid welding method of the second aspect, it is more preferable that the shielding gas be applied to the steel plate from a coaxial direction relative to an arc, and an assist gas having the same composition as that of the shielding gas be further applied to the steel plate from a progression direction of welding.

The steel plate may be any one selected from the group consisting of cold-reduced carbon steel sheets, hot-rolled steel plates, and rolled steels for welded structures.

[Effects of the Invention]

According to the present invention, it is possible to reduce the surface tension of welded metal, promote the discharge of bubbles present in the bottom of a molten pool, and suppress the occurrence of internal defects (blowholes) in the hybrid welding of a steel plate, by using the shielding gas having the particular above-mentioned composition.

Also, the effects of minimization of unstabilization of arc during welding are exhibited by the presence of an optimum amount of the carbon dioxide.

Although the shielding properties may deteriorate if welding is performed at high speed, separate feeding of the assist gas having the same composition as that of the shielding gas from a progression direction of welding achieves high-shielding properties even if the welding is performed at high speed.

BRIEF DESCRIPTION OF THE DRAWINGS

FIG. 1 is a skeleton framework illustrating the main parts of a welding apparatus used for hybrid welding according to the present invention.
FIG. 2 is a diagram illustrating the range of the mixing ratio of oxygen and carbon dioxide in the shielding gas according to the present invention.

BRIEF DESCRIPTION OF THE REFERENCE SYMBOLS

1. Laser head
3. Steel plate
4. Arc torch

5. Wire

6. End-member

BEST MODE FOR CARRYING OUT THE INVENTION

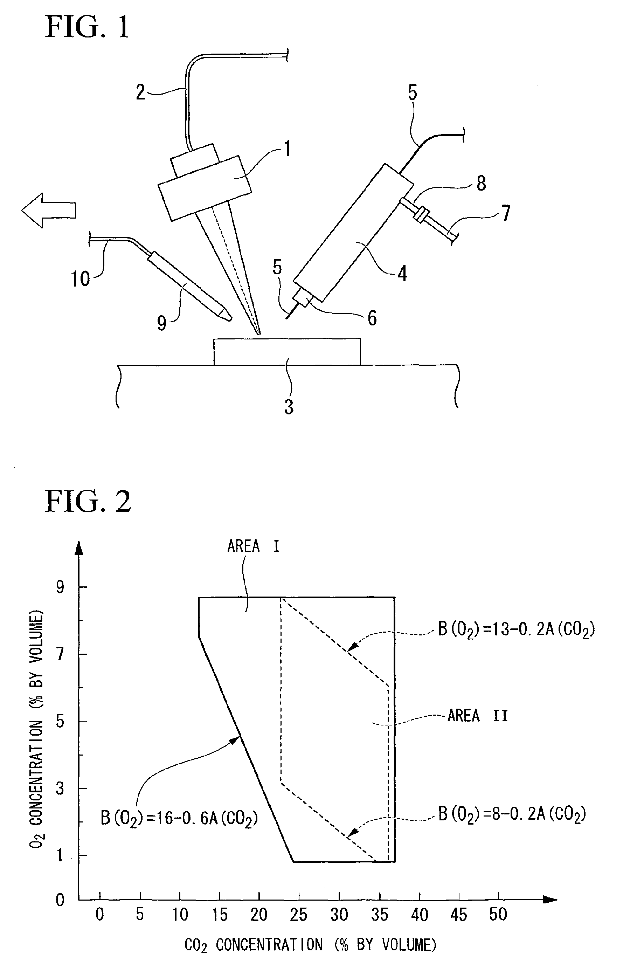

FIG. 1 illustrates the main parts of an embodiment of a welding apparatus used in the hybrid welding method according to the present invention, and the numeral "1" therein illustrates a laser head. In the laser head 1, optical lenses such as a condenser or the like are held. A laser beam with a wave length of 1.064 $\mu$m enters the laser head 1, after being guided through an optical fiber 2 from a laser beam source (now shown) such as, for example, a YAG (Nd) laser oscillator. The laser beam is condensed therein and emitted in a beam state onto a welded portion of a steel plate 3.

The numeral "4" illustrates an arc torch. Into the arc torch 4, a wire 5 is fed from a wire-feeding device (not shown), and an end portion of the wire 5 protrudes from an end-member 6 of the arc torch 4 toward the welded portion, and serves as a welding tip.

Moreover, a nozzle for ejecting a shielding gas from an outer circumference of the wire 5 is formed at the end-member 6 so that the shielding gas fed from a shielding gas source (not shown) through a pipe 7 to a shielding gas inlet 8 of the arc torch 4 is ejected from the nozzle of the end-member 6 toward the welded portion.

The wire 5 is connected to a welding electric source through the wire-feeding device (not shown), so that an arc is discharged from the end portion of the wire 5 toward the welded portion. The arrow in FIG. 1 illustrates the progressing direction of welding.

In addition, the numeral "9" in the figure illustrates an assist gas nozzle. The assist gas nozzle 9 is placed before the arc with respect to a progression direction of welding and connected to an assist gas source (which is not shown in the figure) through a pipe 10 so that an assist gas is able to be ejected from an end thereof toward the welded portion of the steel plate 3.

As shown in FIG. 1, each of a central axis of the arc torch 4, an optical axis of the laser beam, and a central axis of the assist gas nozzle 9 is positioned at an angle to the vertical plane so as to minimize interference between the arc and the laser beam, and so that the angle of the arc torch 4, the axis of the laser beam, and the angle of the assist gas nozzle 9 are opposed to each other.

Next, a method for hybrid welding of the steel plate using the welding apparatus will be explained.

The steel plate is preferably a cold-reduced carbon steel sheet, a hot-rolled steel plate, or rolled steel for welded structure.

From the laser head 1, a laser beam with a wave length of 1.064 $\mu$m and an output power of 1 to 20 kW is emitted towards a welded portion of the steel plate 3. A YAG (Yb) laser with a wave length of 1.03 $\mu$m, a carbon dioxide gas laser with a wave length of 10.6 $\mu$m, or a semiconductor laser with a wave length of 0.8 $\mu$m or 0.95 $\mu$m may also be used.

A direct current is applied to the wire 5 of the arc torch 4 to discharge the arc from the end portion of the wire 5 toward the welded portion. At the same time, the shielding gas is ejected from the nozzle of the end-member 6 of the arc torch 4 toward the welded portion.

The shielding gas is composed of a mixture of argon, carbon dioxide, and oxygen. The ratio of carbon dioxide and oxygen is adjusted to be within the following range:

$$15 \leq A \leq 35, \text{ and, } 1.0 \leq B < 9.0, \text{ and, } B \geq 16\text{-}0.6A,$$

preferably within the following range:

$$25 \leq A \leq 35, \text{ and, } B \geq 8\text{-}0.2A, \text{ and, } B \leq 13\text{-}0.2A,$$

in which A is the volume percentage of carbon dioxide, and B is the volume percentage of oxygen.

By adjusting the ratio of carbon dioxide and oxygen in the shielding gas to be within the above-mentioned range, the arc stability is maintained, the welding activity is made to be excellent, and the occurrence of internal defects (blowholes, pits, or the like) at the welded portion is minimized.

FIG. 2 illustrates the carbon dioxide and oxygen concentration range in the shielding gas. The area surrounded by a solid line (Area I) illustrates the range satisfying the following conditions:

$$15 \leq A \leq 35, \text{ and, } 1.0 \leq B < 9.0, \text{ and, } B \geq 16-0.6A,$$

and the area surrounded by the dashed line (Area II) illustrates the range satisfying the following conditions:

$$25 \leq A \leq 35, \text{ and, } B \geq 8-0.2A, \text{ and, } B \leq 13-0.2A.$$

As is demonstrated by the following examples, the number of blowholes formed per 100 mm welded length is reduced to less than 25 by using a shielding gas having a composition falling within Area I, and the number of blowholes formed per 100 mm welded length is reduced to 10 or less by using a shielding gas having a composition falling within Area II.

As is demonstrated by the following examples, the ratio of carbon dioxide and oxygen in the shielding gas according to the present invention was determined by the actual performance of welding and the evaluation thereof, and the actual number of defects in the welded portions.

The ejection-flow-rate of the shielding gas is generally approximately 10 to 30 liters per minute.

When welding is performed at a high rate, such as 200 cm per minute or more, an assist gas is preferably ejected from the assist gas nozzle 9 toward the welded portion. As the assist gas, a gas having the same composition as that of the shielding gas is used, and the flow rate thereof may be approximately 10 to 40 liter per minute.

Although there is a possibility in which shielding of a molten pool by the shielding gas is disturbed and the shielding properties deteriorate if the welding speed is high, the feeding of the assist gas prevents the deterioration of the shielding properties and achieves favorable shielding even during high-speed welding.

EXAMPLES

Examples and Comparative Examples

Hybrid welding using a shielding gas was performed using the welding apparatus shown in FIG. 1.

Welding was performed by bead-on-plate welding under the following conditions. The shielding gas was fed from an arc torch. As the material to be welded, a steel plate (SPCC) with a thickness of 3.2 mm was used. A mixed gas of three components (argon, oxygen, and carbon dioxide) was used as a shielding gas. These three components were mixed at various ratios to obtain a large number of shielding gases with different compositions.

The optimum mixing ratio of oxygen and carbon dioxide in the shielding gas was experimentally determined based on the number of internal defects at each welded portion.

The range of the mixing ratio suitable for hybrid welding was determined in view of the occurrence of internal defects (such as blowholes, pits, or the like) and stability of the arc at the time of performing hybrid welding under the following welding conditions.

The range in which the number of internal defects (blowholes) occurred was less than half (25 defects) that of when the generally used shielding gas (argon gas with 20% carbon dioxide gas) for arc welding was used (49 blowholes occurred), in which arc was stabilized, and in which no pits were formed, was determined as the range suitable for hybrid welding (Area I). In addition, the concentration range in which the number of blowholes was no more than one-fifth (10 blowholes) that of when the generally used shielding gas (argon gas with 20% carbon dioxide gas) was used was determined as a more preferable range (Area II).

The welding conditions were as follows.

    Arc welding: MAG-welding
    Welding speed: 1.0 m/min
    Distance between tip and base metal: 15 mm
    Laser output power (YAG laser): 2.0 kW
    Welding current: 150 A
    Flow rate of shielding gas: 20 1/min

Welding was performed for a distance of 100 mm, and the number of blowholes, the blowhole size, the existence of pits, and the stability of the arc were evaluated. The results thereof are shown in Tables 1 and 2.

Table 1.

| Concentration of $O_2$ | Concentration of $CO_2$ | Number of blowholes | Others | Evaluation |
|---|---|---|---|---|
| 1.0 | 0 | 100 | Arc was unstable. | × |
| 3.0 | 0 | 135 | Arc was unstable. | × |
| 5.0 | 0 | 75 | Arc was unstable. | × |
| 7.0 | 0 | 64 | Arc was unstable. | × |
| 9.0 | 0 | | Arc was unstable and impossible to weld. | × |
| 0 | 10 | 46 | Many blowholes were formed. | × |
| 5.0 | 10 | 30 | Many blowholes were formed. | × |
| 7.0 | 10 | 28 | Many blowholes were formed. | × |
| 9.0 | 10 | 32 | Pits were formed and blowhole-size was 1.0 mm or more. | × |
| 5.0 | 15 | 29 | Many blowholes were formed. | × |
| 6.0 | 15 | 45 | Many blowholes were formed. | × |
| 7.0 | 15 | 17 | | ○ |
| 8.0 | 15 | 22 | | ○ |
| 9.0 | 15 | 84 | Pits were formed and blowhole-size was 1.0 mm or more. | × |
| 0 | 20 | 49 | Many blowholes were formed. | × |
| 1.0 | 20 | 43 | Many blowholes were formed. | × |
| 3.0 | 20 | 25 | Many blowholes were formed. | × |
| 4.0 | 20 | 12 | | ○ |
| 5.0 | 20 | 20 | | ○ |
| 7.0 | 20 | 16 | | ○ |
| 8.0 | 20 | 17 | | ○ |
| 9.0 | 20 | 17 | Pits were formed and blowhole-size was 1.0 mm or more. | × |

Table 2.

| Concentration of $O_2$ | Concentration of $CO_2$ | Number of blowholes | Others | Evaluation |
|---|---|---|---|---|
| 0 | 25 | 32 | Many blowholes were formed. | × |
| 1.0 | 25 | 20 | | ○ |
| 2.0 | 25 | 19 | | ○ |
| 3.0 | 25 | 10 | | ◎ |
| 5.0 | 25 | 7 | | ◎ |
| 7.0 | 25 | 8 | | ◎ |
| 8.0 | 25 | 10 | | ◎ |

(continued)

| Concentration of $O_2$ | Concentration of $CO_2$ | Number of blowholes | Others | Evaluation |
|---|---|---|---|---|
| 9.0 | 25 | 17 | Pits were formed and blowhole-size was 1.0 mm or more. | × |
| 0 | 30 | 28 | Many blowholes were formed. | × |
| 1.0 | 30 | 15 | | ○ |
| 3.0 | 30 | 10 | | ◎ |
| 5.0 | 30 | 8 | | ◎ |
| 7.0 | 30 | 9 | | ◎ |
| 8.0 | 30 | 12 | | ○ |
| 9.0 | 30 | 33 | Pits were formed and blowhole-size was 1.0 mm or more. | × |
| 0 | 35 | 29 | Many blowholes were formed. | × |
| 1.0 | 35 | 7 | | ◎ |
| 3.0 | 35 | 9 | | ◎ |
| 5.0 | 35 | 9 | | ◎ |
| 6.0 | 35 | 10 | | ◎ |
| 7.0 | 35 | 14 | | ○ |
| 8.0 | 35 | 24 | | ○ |
| 9.0 | 35 | 25 | Pits were formed and blowhole-size was 1.0 mm or more. | × |
| 0 | 40 | 27 | Many blowholes were formed. | × |
| 1.0 | 40 | 35 | Many blowholes were formed. | × |
| 3.0 | 40 | 27 | Pits were formed and blowhole-size was 1.0 mm or more. | × |
| 5.0 | 40 | 67 | Pits were formed and blowhole-size was 1.0 mm or more. | × |
| 7.0 | 40 | 39 | Pits were formed and blowhole-size was 1.0 mm or more. | × |
| 9.0 | 40 | 23 | Pits were formed and blowhole-size was 1.0 mm or more. | × |
| 0 | 50 | 14 | Pits were formed and blowhole-size was 1.0 mm or more. | × |

(continued)

| Concentration of $O_2$ | Concentration of $CO_2$ | Number of blowholes | Others | Evaluation |
|---|---|---|---|---|
| 1.0 | 50 | 19 | Pits were formed and blowhole-size was 1.0 mm or more. | × |

In Tables 1 and 2, × represents a case where at least one of the following occurred: the arc was unstable, pits formed, the blowhole size was 1.0 mm or more, and the number of blowholes formed was 25 or more; ○ represents a case in which the number of blowholes formed was less than 25; and ◎ represents a case in which the number of blowholes formed was less than 10.

The evaluation results of Tables 1 and 2 were plotted on a graph, and the area in which gas compositions with the evaluation result of "○" or "◎" exist are marked as Area I in FIG. 2, and the area in which gas compositions with the evaluation result of "◎" exist are marked as Area II in FIG. 2.

Then, the above-mentioned relationship was determined from the Areas I and II.

Reference Example

In order to confirm the effects of the present invention, conventional laser welding and arc welding were performed and the number of blowholes was evaluated per 100 mm of welded distance.

The material to be welded, the welding speed, the laser output power, the welding current, and the distance between the tip and the base metal were the same as those of the above-mentioned examples.

- Laser welding
  Welding speed: 1.0 m/min
  Laser output power: 2.0 kW
  Shielding gas: Ar (gas generally used for laser welding)
  Flow rate of shielding gas: 40 l/min

- Arc welding
  Welding speed: 1.0 m/min
  Distance between tip and base metal: 15 mm
  Welding current: 150 A
  Shielding gas: Ar-20% $CO_2$ (gas generally used for arc welding)
  Flow rate of shielding gas: 201/min

Results are shown in Table 3. In Table 3, the results of hybrid welding performed by using a generally used shielding gas composed of Ar and 20% $CO_2$ for arc welding are also shown.

Table 3.

| Welding process | Shielding gas | Number of blowholes |
|---|---|---|
| Laser welding | Ar | 125 |
| Arc welding | Ar - 20% $CO_2$ | 1.5 |
| Hybrid welding | Ar - 20% $CO_2$ | 49 |

Results shown in Table 3 revealed that hybrid welding using the generally used shielding gas (Ar - 20% $CO_2$) for arc welding resulted in 49 blowholes. In other words, it was revealed that the use of the shielding gas according to the present invention decreases the occurrence of blowholes in hybrid welding to half or less, more preferably to one-fifth or less, of that when generally used shielding gas was used.

INDUSTRIAL APPLICABILITY

According to the present invention, it is possible to reduce the surface tension of the steel plate, promote discharging of bubbles present in the bottom of a molten pool, and suppress the occurrence of internal defects (blowholes or the like) in hybrid welding of the steel plate, by using a shielding gas having the particular composition mentioned above.

The minimization of unstabilization of the arc during welding is also exhibited by the presence of an optimum amount of the carbon dioxide.

Although the shielding properties may decrease if welding is performed at high speed, separate feeding of an assist gas having the same composition as that of the shielding gas from a progression direction of welding achieves high-shielding properties even if the welding is performed at high speed.

**Claims**

1.   A shielding gas for hybrid welding of a steel plate by combining laser welding and arc welding, **characterized by** comprising: carbon dioxide; and oxygen, in which a mixing ratio of carbon dioxide and oxygen satisfies the following conditions:

$$15 \leq A \leq 35, \text{ and}, 1.0 \leq B < 9.0, \text{ and}, B \geq 16-0.6A,$$

in which A is the volume percentage of carbon dioxide and B is the volume percentage of oxygen.

2.   The shielding gas for hybrid welding according to Claim 1, **characterized in that** the mixing ratio of the carbon dioxide and the oxygen satisfies the following conditions:

$$25 \leq A \leq 35, \text{ and}, B \geq 8-0.2A, \text{ and}, B \leq 13-0.2A.$$

3.   A hybrid welding method for welding a steel plate by combining laser welding and arc welding, **characterized in that** a laser beam, an arc, and the shielding gas of Claim 1 or 2, are applied to the steel plate.

4.   The hybrid welding method according to Claim 3, **characterized in that** the shielding gas is applied to the steel plate from a coaxial direction relative to an arc, and an assist gas having the same composition as that of the shielding gas is further applied to the steel plate from a progression direction of welding.

5.   The hybrid welding method according to Claim 3, **characterized in that** the steel plate is any one selected from the group consisting of cold-reduced carbon steel sheets, hot-rolled steel plates, and rolled steels for a welded structure.

# FIG. 1

# FIG. 2

**INTERNATIONAL SEARCH REPORT**

| International application No. |
| --- |
| PCT/JP2006/315063 |

A. CLASSIFICATION OF SUBJECT MATTER
*B23K26/20*(2006.01)i, *B23K9/16*(2006.01)i, *B23K26/14*(2006.01)i

According to International Patent Classification (IPC) or to both national classification and IPC

B. FIELDS SEARCHED

Minimum documentation searched (classification system followed by classification symbols)
B23K26/20, B23K9/16, B23K26/14

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2001-340981 A (L'Air Liquide, Societe Anonyme pour L'Etude et L'Exploitation des Procedes Georges Claude), 11 December, 2001 (11.12.01), Table 2 & EP 1160048 A1 | 1-5 |
| A | JP 2005-205497 A (L'Air Liquide, Societe Anonyme pour L'Etude et L'Exploitation des Procedes Georges Claude), 04 August, 2005 (04.08.05), Claims & EP 1559498 A1 | 1-5 |

☒ Further documents are listed in the continuation of Box C.　　　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 October, 2006 (19.10.06) | 31 October, 2006 (31.10.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| | International application No. |
|---|---|
| | PCT/JP2006/315063 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-164983 A  (Toshiba Corp.),<br>10 June, 2003 (10.06.03),<br>Fig. 1<br>(Family: none) | 4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005250889 A
- JP 2003164983 A
- JP H9103892 B
- JP 2001138085 A